## Europäisches Patentamt
## European Patent Office
## Office européen des brevets

(19)

(11) Veröffentlichungsnummer: **0 155 480**
**B1**

(12)

# EUROPÄISCHE PATENTSCHRIFT

(45) Veröffentlichungstag der Patentschrift:
**06.04.88**

(21) Anmeldenummer: **85101166.8**

(22) Anmeldetag: **05.02.85**

(51) Int. Cl.⁴: **C 08 L 77/00** //
**(C08L77/00, 51:00)**

(54) Formmassen aus thermoplastischem Polyamid und Pfropfkautschuk.

(30) Priorität: **16.02.84 DE 3405532**

(43) Veröffentlichungstag der Anmeldung:
**25.09.85 Patentblatt 85/39**

(45) Bekanntmachung des Hinweises auf die Patenterteilung:
**06.04.88 Patentblatt 88/14**

(84) Benannte Vertragsstaaten:
**CH DE FR GB IT LI NL**

(56) Entgegenhaltungen:
EP-A-0 014 879
EP-A-0 083 446
DE-A-3 105 364
US-A-3 796 771

(73) Patentinhaber: **BAYER AG, Konzernverwaltung RP
Patentabteilung, D-5090 Leverkusen 1 Bayerwerk
(DE)**

(72) Erfinder: **Trabert, Ludwig, Dr., Leydelstrasse 67,
D-4150 Krefeld (DE)**
Erfinder: **Binsack, Rudolf, Dr., Bethelstrasse 4a,
D-4150 Krefeld 1 (DE)**
Erfinder: **Lindner, Christian, Dr., Riehler Strasse
200, D-5000 Köln 60 (DE)**
Erfinder: **Merten, Josef, Dr., Krünsend 30, D-4052
Korschenbroich 1 (DE)**
Erfinder: **Haupt, Heinrich, Dr.,
Bodelschwinghstrasse 15, D-4150 Krefeld (DE)**
Erfinder: **Morbitzer, Leo, Dr., Rungestrasse 50,
D-5000 Köln 80 (DE)**
Erfinder: **Weber, Gunter Bernd, Dr., Buschstrasse
169, D-4150 Krefeld (DE)**
Erfinder: **Wulff, Claus, Dr., Richard- Strauss-
Strasse 21, D-4150 Krefeld (DE)**

0 155 480

**Beschreibung**

Die Erfindung betrifft thermoplastische Formmassen mit verbesserter Zähigkeit bei tiefen Temperaturen aus Polyamid und vernetzten Pfropfkautschuken aus der Reihe der Dienkautschuke und der Acrylatkautschuke, indem man die Legierungen der beiden Komponenten unterhalb des Polyamid-Schmelzpunktes erhitzt.

Formkörper aus Polyamiden haben sich aufgrund ihrer mechanischen Festigkeitswerte wie Steifigkeit, Abriebfestigkeit, Härte, dynamischer und thermischer Belastbarkeit und ihrer leichten Herstellbarkeit bewährt. Ein Nachteil ist ihre unzureichende Zähigkeit.

Es gibt eine Reihe von Vorschlägen, die Zähigkeit von Polyamidformmassen durch Zumischen anderer Polymerer zu verbessern. So wurden Polyolefine (DE-A 1 694 802, DE-A 2 038 317, DE-A 2 022 295) und Ethylenionomere (EP-A 34 704, EP-A 69 200, EP-A 72 480) vorgeschlagen. Es wurden darüber hinaus als Modifikationen gepfropfte Acrylatkautschuke und Dienkautschuke vorgeschlagen, die eine ganz spezifische Pfropfstruktur aufweisen und nach bestimmten Verfahren hergestellt werden (EP-A 3126, DE-A 2 758 615, DE-A 3 101 771, DE-A 3 120 803).

In der US-A 3 796 771 werden Polyamidmassen, die auch bei tieferen Temperaturen eine erhöhte Schlagzähigkeit besitzen, durch Modifizierung mit einem Pfropfkautschuk, der in der Hülle aminreaktive Einheiten besitzt (z.B. COOH-, Anhydrid-, Epoxid-, Oxetan-, Halogenid-, Isocyanat-, Isothiocyanat oder $\alpha$-Hydroxymethyl-acrylsäure), die mit den Aminoendgruppen des Polyamids in der Schmelze zu reagieren vermögen, erhalten. Gemäß diesem Stand der Technik wird ein Pfropfkautschuk über seine spezifischen aminreaktiven Endgruppen mit den Aminogruppen des Polyamids in der Schmelze verknüpft.

Diese Formmassen weisen im allgemeinen eine verbesserte Zähigkeit auf. Es hat sich aber gezeigt, daß solche Formmassen für wichtige Anwendungen wie beispielsweise im Kfz-Bereich an der Karosserie, den Stoßfängern und Spoilern, dem Lenkrad und der Lenkradsäule nicht zur vollen Zufriedenheit eingesetzt werden können. Es werden dafür besondere Anforderungen gestellt, insbesondere bei tiefen Temperaturen.

Überraschenderweise wurde nun gefunden, daß man zähere Produkte erhält, wenn man nach üblichen Verfahren hergestellte Mischungen aus Polyamid und einem bestimmten Pfropfkautschuk und bestimmten Pfropfkautschuk-Typen (ohne die genannten aminreaktiven Gruppen des Standes der Technik) auf Temperaturen unterhalb des Schmelzpunktes des Polyamids erhitzt. Dadurch wird offenbar eine Art "Ankopplung" erzielt, daß der durch Lösefraktionierung mit gängigen Polyamidlösemitteln (z.B. Ameisensäure, Trifluorethanol, 1. 1. 1. 3. 3. 3-Hexafluor-2-propanol) erhältliche unlösliche Rückstand nicht nur Kautschuk, sondern auch einen Polyamidanteil enthält.

Es ist zwar bekannt, das Molekulargewicht und/oder die Viskosität von Polyamiden durch Erhitzen auf Temperaturen unterhalb des Polyamid-Schmelzpunktes unter Inertgas und bei vermindertem Druck zu erhöhen. Hierdurch werden die mechanischen Eigenschaften der Polyamide, insbesondere die Zähigkeit, aber nicht nennenswert verändert. Außerdem mußte man bei einer Festphasennachkondensation in Gegenwart von Pfropfkautschuk erwarten, daß die Pfropfprodukte, insbesondere die auf Polybutadien-Basis, bei längeren Verweilzeiten bei hohen Temperaturen thermisch geschädigt und damit unbrauchbar werden und gegebenenfalls eine Versprödung stattfindet.

Gegenstand der Erfindung sind Verfahren zur Herstellung von thermoplastischen Formmassen aus thermoplastischen Amiden und Pfropfkautschuken, entsprechend

I. 65-97 Gew.-%, vorzugsweise 75-90 Gew.-%, bezogen auf die Komponenten I und II, eines thermoplastischen Polyamids mit relativen Viskositäten von 2,0 bis 5,0 (1 % in meta-Kresol bei 25°C) und

II. 3-35 Gew.-%, bevorzugt 10-25 Gew.-%, bezogen auf die Komponenten I und II, eines durch Pfropfpolymerisation von 15-60 Gew.-%, vorzugsweise 25-40 Gew.-% wenigstens eines Vinyl- oder Vinylidenmonomeren, vorzugsweise aus der Reihe Styrol, $\alpha$-Methylstyrol, Acrylnitril, $C_1$-$C_8$-Alkylacrylat und $C_1$-$C_8$-Alkyl-methacrylat, auf 40 bis 85 Gew.-%, bevorzugt 60 bis 75 Gew.-%, eines teilchenförmigen vernetzten Dien- oder Acrylatkautschuks mit einem Gelgehalt von mindestens 50 Gew.-%, erhaltenen Pfropfkautschuks II, dadurch gekennzeichnet, daß man die Komponenten I und II unter Aufschmelzen vermischt und granuliert und das Granulat in ruhendem oder bewegten Zustand mindestens eine halbe Stunde unter vermindertem Druck oder unter inerter Schutzgas-Atmosphäre auf Temperaturen von 5 bis 80°C unterhalb des Schmelzpunktes des Polyamids erhitzt, bis sie einen Ankopplungsgrad der beiden Komponenten I und II von $\leq 3$ Gew.-%, vorzugsweise $\leq 8$ Gew.-%, bestimmt durch Lösefraktionierung in Ameisensäure, aufweisen.

Weiterer Erfindungsgegenstand sind thermoplastische Formmassen aus thermoplastischen Polyamiden I und Kautschuken II mit einem Ankopplungsgrad von mindestens 3 Gew.-%, vorzugsweise $> 8$ Gew.-%, erhalten nach dem vorbeschriebenen Verfahren; sie sind insbesondere dadurch gekennzeichnet, daß sie aus 75-90 Gew.-% der Komponente I und 10-25 Gew.-% der Komponente II erhalten worden sind.

Besonders bevorzugt sind die beanspruchten thermoplastischen Formmassen, dadurch gekennzeichnet, daß die Komponente II durch Pfropfpolymerisation von 20 bis 50, insbesondere 25 bis 40 Gew.-% wenigstens eines Vinyl- oder Vinylidenmonomeren auf 50 bis 80, insbesondere 60 bis 75 Gew.-% eines teilchenförmigen, vernetzten Dien- oder Acrylautkautschuks erhalten wurde, wobei als Pfropfmonomere in Komponente II Methylmethacrylat, Mischungen aus Styrol und Methylmethacrylat im Mengenverhältnis 10 : 90 bis 50 : 50 oder Mischungen aus Styrol und Acrylnitril im Mengenverhältnis 90 : 10 bis 50 : 50 und als Pfropfgrundlage vernetzte Homo- und/oder Copolymerisate aus konjugierten $C_4$-$C_6$-Dienen oder vernetzte Acrylatkautschuke auf Basis $C_1$-$C_8$-Alkylacrylaten, vorzugsweise mit einem Gelgehalt von mindestens 80 Gew.-%, insbesondere von mindestens 90 Gew.-%, eingesetzt werden.

2

Die erfindungsgemäßen Formmassen werden vorzugsweise so hergestellt, daß man die beiden Polymerkomponenten unter Aufschmelzen, vorzugsweise in einem Doppelwellenextruder, miteinander mischt und zu Granulat verarbeitet und anschließend vorzugsweise unter möglichst weitgehendem Ausschluß von Sauerstoff und gegebenenfalls im Vakuum oder unter $N_2$ auf Temperaturen von 5 bis 80, vorzugsweise 10-50, insbesondere 15-40°C, unterhalb des Schmelzpunktes des zur Herstellung der Legierung verwendeten Polyamides mindestens eine halbe Stunde, vorzugsweise mindestens 4 Stunden erhitzt.

Als Polyamide I eignen sich alle thermoplastischen Polyamide, vorzugsweise teilkristallinen Polyamide. So können als teilkristalline Polyamide für die erfindungsgemäßen Formmassen Polyamid-6, Polyamid-66 oder deren Copolymere eingesetzt werden. Weiterhin kommen teilkristalline Polyamide in Betracht, deren Säurenkomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht.

Außerdem sind Polyamide geeignet, die teilweise aus Lactamen mit 6 - 12 C-Atomen und unter Mitverwendung einer oder mehrerer der oben genannten Ausgangskomponenten hergestellt worden sind.

Besonders bevorzugte teilkristalline Polyamide sind Polyamid-6 und Polyamid-66.

Die Polyamide sollen vorzugsweise eine relative Viskosität (gemessen an einer 1-gew.-%igen Lösung in m-Kresol bei 25°C) von 2,0 - 5,0, besonders bevorzugt von 2,5 bis 4,0 aufweisen.

Bevorzugte Pfropfkautschuke II besitzen mittlere Teilchendurchmesser $d_{50}$ von 0,05 bis 1, vorzugsweise von 0,1 bis 0,8, insbesondere von 0,2 bis 0,8 µm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782 - 796) oder mittels Elektronenmikroskopie und anschließender Teilchenauszählung (G. Kämpf, H. Schuster, Angew. makromolekulare Chemie, 14, (1970), 111-129) oder mittels Lichtstreuungsmessungen.

Die Pfropfkautschuke II sind vernetzt und haben einen Gelgehalt von mindestens 50 Gew.-%, vorzugsweise von mindestens 80 Gew.-% und insbesondere von mindestens 90 Gew.-%, bezogen auf II.

Die Gelgehalte der vernetzten Dienkautschuke werden bestimmt bei 25°C in Toluol, die Gelgehalte der vernetzten Acrylatkautschuke bei 25°C in Dimethylformamid (M. Hoffmann, H. Krämer, R. Kuhn, Polymeranalytik I und II, Georg Thieme Verlag, Stuttgart 1977).

Bevorzugte Pfropfkautschuke II sind Pfropfpolymerisate von 15 - 60, die man durch Pfropfpolymerisation, vorzugsweise von 20 bis 50, insbesondere 25 bis 40 Gew.-% wenigstens eines Vinyl- oder Vinylidenmonomeren vorzugsweise aus der Reihe Styrol, α-Methylstyrol, Acrylnitril, $C_1$-$C_8$ -Alkylacrylat oder $C_1$-$C_8$ -Alkylmethacrylat, auf 40 bis 85, vorzugsweise 50 bis 80, insbesondere 60 bis 75 Gew.-% eines teilchenförmigen, vernetzten Dien- oder Acrylatkautschuks erhält.

Die Pfropfmonomeren können einzeln oder auch in Mischungen auf die Pfropfkautschuk-Grundlage aufgepfropft werden. Bevorzugte Pfropfmonomere sind Methylmethacrylat sowie Mischungen aus Styrol und Methylmethacrylat im Mengenverhältnis 10 : 90 bis 50 : 50 und Mischungen aus Styrol und Acrylnitril im Mengenverhältnis 90 : 10 bis 50 : 50.

Bevorzugte Dienkautschuke sind vernetzte Homo- und/oder Copolymerisate aus konjugierten $C_4$ -$C_6$ -Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z. B. Styrol, Acrylnitril, Ester der Acryl- oder Methacrylsäure mit einwertigen $C_1$-$C_4$-Alko-holen, wie z. B. Methylmethacrylat, Ethylacrylat, Methylacrylat, Ethylmethacrylat, enthalten.

Die Herstellung der Dienkautschuk-Pfropfgrundlage und der daraus hergestellten Pfropfpolymerisate wird z. B. in "Methoden der Organischen Chemie" (Houben-Weyl), Bd. 14/1, Georg Thieme Verlag, Stuttgart 1961, S. 393 - 406, sowie in Ullmanns Encyclopädie der technischen Chemie, 4. Auflage, Bd. 19, Verlag Chemie, Weinheim, 1981, S. 279 bis 284, beschrieben.

Vorzugsweise werden als Pfropfprodukte solche eingesetzt wie sie in der DE-A 27 42 176 beschrieben werden.

Bevorzugte Pfropfgrundlagen auf Basis Acrylatkautschuk sind Polymerisate, die durch Polymerisation von $C_1$ -$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt, wobei bevorzugt als vernetzende Monomere mit mehr als einer copolymerisierbaren Doppelbindung Ester ungesättigter $C_3$ -$C_{12}$-Monocarbonsäuren und ungesättigter einwertiger $C_2$ -$C_{12}$-Alkohole oder gesättigter $C_2$ -$C_{20}$-Polyole mit 2 bis 4 OH-Gruppen, wie z. B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di- und Trivinylbenzole; aber auch Triallylphosphat eingesetzt werden.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Trisacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydienkerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die
a) mit cyclischen trifunktionellen Comonomeren wie Triallylcyanurat und Triallylisocyanurat vernetzt sind (beschrieben in DE-A 3 039 114);
b) einen Polybutadienkern enthalten (beschrieben in DE-A 32 000 70);
c) hergestellt wurden "in Abwesenheit von Suspendiermittel" (beschrieben in DE-A 3 117 052).

Bei der Herstellung der Pfropfkautschuke II durch Pfropfcopolymerisation, die üblicherweise in Gegenwart von Radikalstartern, z. B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfkautschuk II im Sinne der Erfindung ist deshalb das durch Polymerisation von Pfropfmonomeren in Gegenwart des Kautschuklatex erhaltene Produkt.

Die erfindungsgemäßen Formmassen weisen optimale Eigenschaften auf, wenn die Menge an freiem (Co)Polymerisat im Pfropfprodukt II 15 Gew.-%, vorzugsweise 10 Gew.-%, insbesondere 7 Gew.-%, bezogen auf II, nicht übersteigt. Der Staudinger-Index dieser freien (Co)polymerisate soll weniger als 0,6 dl/g, vorzugsweise weniger als 0,4 dl/g betragen, gemessen in Dimethylformamid bei 25° C.

Besonders bevorzugte gepfropfte Kautschuke sind z. B. in der DE-A 2 742 176, 2 941 025, 3 151 441, 3 200 070 und in der EP-A 34 748 beschrieben.

Die erfindungsgemäßen Formmassen können übliche Additive, wie Gleit- und Entformungsmittel, Nukleierungsmittel, Stabilisatoren, Füll- und Verstärkungsstoffe, Flammschutzmittel sowie Farbstoffe enthalten.

Die Formmassen können bis zu 60 Gew.-%, bezogen auf die verstärkte Formmasse, Füllstoffe und/oder Verstärkungsstoffe, enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Zur Flammschutzausrüstung können alle bekannten Flammschutzmittel, wie z. B. cyclische Chlorverbindungen, Melamin und dessen Salze, wie Melamincyanurat oder Melaminsulfat und/oder roter Phosphor verwendet werden.

Die Herstellung der Mischungen aus Polyamid I und Pfropfkautschuk II kann in den üblichen Mischaggregaten, wie Walzen, Knetern, Ein- und Mehrwellenextrudern, erfolgen. Die Temperatur bei der Herstellung der Mischungen sollte mindestens 10° C und zweckmäßig höchstens 90° C oberhalb des Schmelzpunktes des Polyamids liegen.

Die anschließende Temperung kann diskontinuierlich oder kontinuierlich bei Bedingungen, bei denen eine Oxidation weitgehend ausgeschlossen ist, d.h. unter inertem Schutzgas wie Stickstoff, Kohlendioxid, Argon oder Helium oder unter vermindertem Druck durchgeführt werden. Geeignet sind alle Apparate, die solche Bedingungen ermöglichen. Die Erhitzung kann durchgeführt werden in ruhendem oder auch in einem bewegten Bett, z. B. in einem Wirbelbett. Man kann die Erhitzung auch durchführen in senkrechten oder in waagerechten bzw. schräg gelagerten Rohrreaktoren. Die Art des Reaktors ist unkritisch. Geeignet sind im Prinzip alle Reaktoren und alle Verfahren, die bei der Polykondensation von Polyamid in fester Phase unterhalb des Polyamid-Schmelzpunktes bekannt sind. Im allgemeinen ist es zweckmäßig, die Erhitzung so vorzunehmen, daß die Formmassen dabei bewegt werden, da dadurch der Wärmeübergang erleichtert wird und gegebenenfalls auftretende Verklebungen vermieden werden. So kann es auch zweckmäßig sein, die Erhitzung bei gestaffelten Temperaturen vorzunehmen.

In bestimmten Fällen kann es vorteilhaft sein, das Tempern in Gegenwart von kleinen Mengen an Diaminen vorzunehmen, wobei es dann zweckmäßig ist, das Diamin der Polyamidkomponente zu verwenden.

Bei dem erfindungsgemäßen Verfahren wird ein Ankopplungsgrad von mindestens ≥3 %, bevorzugt 6 % und insbesondere ≥8 % in einfacher Weise erreicht.

Unter Ankopplungsgrad wird das prozentuale Gewichtsverhältnis von an das Pfropfprodukt II angekoppeltem thermoplastischem Polyamid I, bezogen auf die Gesamtmenge an Pfropfprodukt II, verstanden:

$$\text{Ankopplungsgrad} = \frac{\text{angekoppeltes thermoplastisches Polyamid I (in g) x 100}}{\text{Gesamtmenge an Pfropfprodukt II (in g)}}$$

4

Der Ankopplungsgrad wird bestimmt durch Behandeln der erfindungsgemäßen Formmassen in Ameisensäure bis zur Gewichtskonstanz, d.h. bis alles lösliches thermoplastisches Polyamid durch Ameisensäure gelöst wurde. In dem verbleibenden unlöslichen Rückstand wird das angekoppelte Polyamid bestimmt z. B. durch IR-Spektroskopie oder durch Stickstoffanalyse in bekannter Weise.

Die erfindungsgemäßen Formmassen zeichnen sich durch eine verbesserte Zähigkeit aus. Ein herausragendes Merkmal ist die Verbesserung der Zähigkeit bei tiefen Temperaturen. Ein weiteres Merkmal ist die hohe Wärmeformbeständigkeit.

Die aus den erfindungsgemäßen Formmassen durch Spritzguß oder Extrusion hergestellten Formkörper eignen sich besonders dort, wo mit hohen Stoßbelastungen gerechnet werden muß, z. B. im Kfz-Bereich für Stoßfänger, Spoiler, Rammleisten, Karosserieteile, Lenkräder, Lenkradsäulen.

**Beispiele**

Verwendete Komponenten:

A. Polyamid-6 mit einer relativen Viskosität (gemessen an einer 1 gew.-% igen Lösung in m-Kresol bei 25°) von 3,0.

B) Pfropfprodukt hergestellt aus 80 Gew.-% Pfropfgrundlage aus vernetztem Polybutadien (Gelgehalt 85 Gew.-%, gemessen in Toluol) und 20 Gew.-% Pfropfauflage aus Methylmethacrylat; mittlerer Teilchendurchmesser $d_{50}$ = 0,4 µm (Pfropfprodukt C aus EP-A 58 331).

C) Pfropfprodukt mit Kern/Mantel-Struktur hergestellt aus: 81 Gew.-% Pfropfgrundlage mit 0,23 Gew.-Tl. Triallylcyanurat und 99,1 Gew.-Tl. n-Butylacrylat, polymerisiert als Mantel um 0,66 Gew.-Tl. Polybutadienkern (Gelgehalt der Pfropfgrundlage 89 Gew.-%, gemessen in Dimethylformamid bei 25°C), sowie 19 Gew.-% Pfropfhülle aus Methylmethacrylat; mittlerer Teilchendurchmesser $d_{50}$ = 0,5 µm (Herstellung entsprechend EP-A 34 748).

**Herstellung und Prüfung der Formmassen**

Auf einem kontinuierlich arbeitenden Doppelwellenextruder wurden die Komponenten aufgeschmolzen und homogenisiert. Die Zylindertemperaturen wurden so gewählt, daß Massetemperaturen von 260 - 280°C eingehalten wurden. Der Schmelzstrang wurde vor dem Austritt aus der Düse entgast, in Wasser abgekühlt, granuliert und getrocknet (Vergleichsbeispiele 1 - 4).

Von den Formmassen wurden auf einer üblichen Spritzgußmaschine ASTM-Stäbe gespritzt (Massetemperatur 260°C, Formtemperatur 80°C). Geprüft wurden die Kerbschlagzähigkeit (nach Izod) bei den angegebenen Temperaturen sowie die Wärmeformbeständigkeit (Vicat-Erweichungstemperatur nach DIN 53 460, Methode B), Schmelzwärme nach der DSC-Methode mit einer Aufheizgeschwindigkeit von 20°C/Min.

Das so erhaltene Granulat wurde in einem Glasrohr von 20 mm Durchmesser 200°C heißem Stickstoff (6 l Stickstoff/h) unterschiedlichen Zeiten ausgesetzt. Nach dem Abkühlen wurden ASTM-Stäbe hergestellt und geprüft (erfindungsgemäße Beispiele 1a - 4a).

**Tabelle 1**

| Beispiel | Komponente (Gew.-%) | | | Erhitzungs- | Kerbschlagzähigkeit (J/m) | | | | | Ankopplungs- |
|---|---|---|---|---|---|---|---|---|---|---|
| | I | II | III | dauer (h) | +20°C | -10°C | -20°C | -30°C | -40°C | grad |
| 1* | 70 | 30 | - | 0 | 1150 | 900 | 800 | 420 | 250 | 1,4 |
| 1a | 70 | 30 | - | 10 | 1250 | 1200 | 1100 | 1000 | 980 | 6,1 |
| 2* | 90 | 10 | - | 0 | 600 | 200 | 150 | 100 | 80 | 1,8 |
| 2a | 90 | 10 | - | 10 | 800 | 650 | 200 | 150 | 150 | 6,5 |
| 3* | 80 | 20 | - | 0 | 800 | - | 200 | - | 100 | 1,5 |
| 3a | 80 | 20 | - | 10 | 1000 | - | 600 | - | 250 | 7,0 |
| 4* | 80 | - | 20 | 0 | 200 | - | - | - | - | 0,5 |
| 4a | 80 | - | 20 | 10 | 1500 | 1000 | 600 | 500 | 200 | 3,0 |

* Vergleichsversuche

| Beispiel | Vicat B (°C) | Schmelzwärme (J/g) |
|---|---|---|
| 1* | 140 | 45 |
| 1a | 155 | 52 |

**Patentansprüche**

1. Verfahren zur Herstellung von thermoplastischen Formmassen aus thermoplastischen Amiden und Pfropfkautschuken, entsprechend

I. 65-97 Gew.-%, vorzugsweise 75-90 Gew.-%, bezogen auf die Komponenten I und II, eines thermoplastischen Polyamids mit relativen Viskositäten von 2,0 bis 5,0 (1 % in meta-Kresol bei 250°C) und

II. 3-35 Gew.-%, bevorzugt 10-25 Gew.-%, bezogen auf die Komponenten I und II, eines durch Pfropfpolymerisation von 15-60 Gew.-%, vorzugsweise 25-40 Gew.-%, wenigstens eines Vinyl oder Vinylidenmonomeren, vorzugsweise aus der Reihe Styrol, $\alpha$-Methylstyrol, Acrylnitril, $C_1$-$C_8$-Alkylacrylat und $C_1$-$C_8$-Alkylmethacrylat, auf 40 bis 85 Gew.-%, bevorzugt 60 bis 75 Gew.-%, eines teilchenförmigen vernetzten Dien-oder Acrylatkautschuks mit einem Gelgehalt von mindestens 50 Gew.-%, erhaltenen Pfropfkautschuks II, dadurch gekennzeichnet, daß man die Komponenten I und II unter Aufschmelzen vermischt und granuliert und das Granulat in ruhendem oder bewegten Zustand mindestens eine halbe Stunde unter vermindertem Druck oder unter inerter Schutzgas-Atmosphäre auf Temperaturen von 5 bis 80°C unterhalb des Schmelzpunktes des Polyamids erhitzt, bis sie einen Ankopplungsgrad der beiden Komponenten I und II von $\leqq 3$ Gew.-%, vorzugsweise $\leqq 8$ Gew.-%, bestimmt durch Lösefraktionierung in Ameisensäure, aufweisen.

2. Verfahren nach Anspruch 1, dadurch gekennzeichnet, daß man das Granulat mindestens 4 Stunden auf Temperaturen von 10 bis 50° unterhalb des Schmelzpunktes des zur Herstellung der Legierung verwendeten Polyamides I erhitzt.

3. Thermoplastische Formmassen aus thermoplastischen Polyamiden I und Kautschuken II mit einem Ankopplungsgrad von mindestens 3 Gew.-%, vorzugsweise >8 Gew.-%, erhalten nach dem Verfahren nach Ansprüchen 1 und 2.

4. Thermoplastische Formmassen nach Anspruch 3, dadurch gekennzeichnet, daß sie als Polyamide Polyamid 6 und/oder Polyamid 66 enthalten.

5. Thermoplastische Formmassen nach Ansprüchen 3 und 4, dadurch gekennzeichnet, daß sie aus 70-95 Gew.-%, vorzugsweise 75-90 Gew.-% der Komponente I und 5-30 Gew.-%, vorzugsweise 10-25 Gew.-%, der Komponente II erhalten worden sind.

6. Thermoplastische Formmassen nach Ansprüchen 3 bis 5, dadurch gekennzeichnet, daß die Komponente II durch Pfropfpolymerisation von 20 bis 50, insbesondere 25 bis 40 Gew.-% wenigstens eines Vinyl- oder Vinylidenmonomeren auf 50 bis 80, insbesondere 60 bis 75 Gew.-% eines teilchenförmigen, vernetzten Dien- oder Acrylatkautschuks erhalten wurde.

7. Thermoplastische Formmassen nach Ansprüchen 3 bis 6, dadurch gekennzeichnet, daß als Pfropfmonomere in Komponente II Methylmethacrylat, Mischungen aus Styrol und Methylmethacrylat im Mengenverhältnis 10 : 90 bis 50 : 50 oder Mischungen aus Styrol und Acrylnitril im Mengenverhältnis 90 : 10 bis 50 : 50 und als Pfropfgrundlage vernetzte Homo- und/oder Copolymerisate aus konjugierten $C_4$-$C_6$-Dienen oder vernetzte Acrylatkautschuke auf Basis $C_1$-$C_8$-Alkylacrylaten, vorzugsweise mit einem Gelgehalt von mindestens 80 Gew.-%, insbesondere von mindestens 90 Gew.-%, eingesetzt werden.

**Claims**

1. Process for the production of thermoplastic moulding compositions from thermoplastic amides and graft rubbers, using

I. 65-97 % by weight, preferably 75-90 % by weight, based on components I and II, of a thermoplastic polyamide with relative viscosities of 2.0 to 5.0 (1 % in meta-cresol at 25°C) and

II. 3-35 % by weight, preferably 10-25 % by weight, based on components I and II, of a graft rubber II obtained by graft polymerisation of 15-60 % by weight, preferably 25-40 % by weight, of at least one vinyl or vinylidene monomer, preferably from the series comprising styrene, $\alpha$-methylstyrene, acrylonitrile, $C_1$-$C_8$-alkyl acrylate and $C_1$-$C_8$-alkyl methacrylate, on to 40 to 85 % by weight, preferably 60 to 75 % by weight, of a particulate crosslinked diene or acrylate rubber with a gel content of at least 50 % by weight, characterised in that components I and II are mixed, while melting, and the mixture is granulated and the granules are heated in a stationary or agitated state for at least half an hour under reduced pressure or under an inert protective gas atmosphere to temperatures of 5 to 80°C below the melting point of the polyamide, until they have a degree of coupling of the two components I and II of $\leq 3$ % by weight, preferably $\leq 8$ % by weight, determined by solution fractionation in formic acid.

2. Process according to Claim 1, characterised in that the granules are heated for at least 4 hours to temperatures of 10 to 50° below the melting point of the polyamide I used for the production of the blend.

3. Thermoplastic moulding compositions of thermoplastic polyamides I and rubbers II with a degree of coupling of at least 3 % by weight, preferably >8 % by weight, obtained by the process according to Claims 1 and 2.

4. Thermoplastic moulding compositions according to Claim 3, characterised in that they contain polyamide 6 and/or polyamide 66 as the polyamides.

5. Thermoplastic moulding compositions according to Claims 3 and 4, charlacterised in that they have been obtained from 70-95 % by weight, preferably 75-90 % by weight of component I and 5-30 % by weight, preferably 10-25 % by weight of component II.

6. Thermoplastic moulding compositions according to Claims 3 to 5, characterised in that component II has been obtained by graft polymerisation of 20 to 50, in particular 25 to 40 % by weight of at least one vinyl or vinylidene monomer on to 50 to 80, in particular 60 to 75 % by weight, of a particulate, crosslinked diene or acrylate rubber.

7.Thermoplastic moulding compositions according to Claims 3 to 6, characterised in that methyl methacrylate, mixtures of styrene and methyl methacrylate in a quantitative ratio of 10 : 90 to 50 : 50 or mixtures of styrene and acrylonitrile in a quantitative ratio of 90 : 10 to 50 : 50 are used as the graft monomer in component II and crosslinked homo- and/or copolymers of conjugated $D_4$-$C_6$-dienes or crosslinked acrylate rubbers based on $C_1$-$D_8$-alkyl acrylates, preferably with a gel content af at least 80 % by weight, in particular of at least 90 % by weight, are used as the graft base.

## Revendications

1. Procédé de préparation de matières à mouler thermoplastiques consistant en amides thermoplastiques et caoutchoucs greffés, à savoir:

I. 65 à 97 % en poids, de préférence 75 à 90 % en poids, par rapport aux composants I et II, d'un polyamide thermoplastique ayant une viscosité relative de 2,0 à 5,0 (à 1 % dans le méta-créasol à 25°C), et

II. 3 à 35 % en poids, de préférence 10 à 25 % en poids, par rapport aux composants I et II, d'un caoutchouc greffé II obtenu par polymérisation greffée de 15 à 60 % en poids, de préférence 25 à 40 % en poids, d'au moins un monomère vinylique ou vinylidénique de préférence choisi dans le groupe du styrène, de l'$\alpha$-méthylstyrène, de l'acrylonitrile, des acrylates d'alkyle en $C_1$-$C_8$ et des méthacrylates d'alkyle en $C_1$-$C_8$, sur 40 à 85 % en poids, de préférence 60 à 75 % en poids, d'un caoutchouc diénique ou d'un caoutchouc d'acrylate réticulé à l'état de particules, à une teneur en gel d'au moins 50 % en poids, caractérisé en ce que l'on mélange les composants I et II et on les fond puis on les met à l'état de granulés et on chauffe les granulés au repos ou en mouvement pendant au moins 1/2 h sous vide ou en atmosphère de gaz protecteurs inertes à des températures de 5 à 80°C au-dessous du point de fusion du polyamide jusqu'à un taux de couplage supérieur ou égal à 3 % en poids, de préférence supérieur ou égal à 8 % en poids, déterminé par fractionnement par dissolution dans l'acide formique, entre les deux composants I et II.

2. Procédé selon la revendication 1, caractérisé en ce que l'on chauffe les granulés pendant au moins 4 h à des températures inférieures de 10 à 50°C au point de fusion du polyamide I utilisé pour la préparation du mélange.

3. Matières à mouler thermoplastiques consistant en des polyamides I et des caoutchoucs II à un taux de couplage d'au moins 3 % en poids et de préférence supérieur à 8 % en poids, obtenues par le procédé selon les revendications 1 et 2.

4. Matières à mouler thermoplastiques selon la revendication 3, caractérisées en ce qu'elles contiennent en tant que polyamides du polyamide-6 et/ou du polyamide-66.

5. Matières à mouler thermoplastiques selon les revendications 3 et 4, caractérisées en ce qu'elles ont été obtenues à partir de 70 à 95 % en poids, de préférence 75 à 90 % en poids, du composant I, et 5 à 30 % en poids, de préférence 10 à 25 % en poids, du composant II.

6. Matières à mouler thermoplastiques selon les revendications 3 à 5, caractérisées en ce que le composant II a été obtenu par polymérisation greffée de 20 à 50 et plus spécialement de 25 à 40 % en poids d'au moins un monomère vinylique ou vinylidénique sur 50 à 80, plus spécialement de 60 à 75 % en poids, d'un caoutchouc diénique ou d'un caoutchouc d'acrylate réticulé à l'état de particules.

7. Matières à mouler thermoplastiques selon les revendications 3 à 6, caractérisées en ce que, dans le composant II, les monomères greffés consistent en méthacrylate de méthyle, mélanges de styrène et de méthacrylate de méthyle, dans des proportions relatives de 10 : 90 à 50 : 50, ou mélanges de styrène et d'acrylonitrile dans des proportions relatives de 90 : 10 à 50 : 50, et le support de greffage consiste en homo-et/ou copolymères réticulés de diènes conjugués en $C_4$-$C_6$ ou en caoutchoucs d'acrylates réticulés à base d'acrylates d'alkyle en $C_1$-$C_8$, de préférence à une teneur en gel d'au moins 80 % en poids et plus spécialement d'au moins 90 % en poids.